(19)

Europäisches
Patentamt
European
Patent Office
Office européen
des brevets

(11) **EP 1 772 887 A1**

(12) **EUROPEAN PATENT APPLICATION**

(43) Date of publication:
**11.04.2007 Bulletin 2007/15**

(51) Int Cl.:
*H01J 1/312* (2006.01)      *H01J 17/49* (2006.01)

(21) Application number: **06121902.8**

(22) Date of filing: **06.10.2006**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **07.10.2005 KR 20050094503
11.10.2005 KR 20050095490**

(71) Applicant: **Samsung SDI Co., Ltd.
Suwon-si,
Gyeonggi-do (KR)**

(72) Inventors:
• **Son, Seung-Hyun
Gyeonggi-do (KR)**

• **Kim, Sung-Soo
Gyeonggi-do (KR)**
• **Jang, Sang-Hun
c/o Samsung SDI Co., Ltd.
Gyeonggi-do (KR)**

(74) Representative: **Read, Matthew Charles et al
Venner Shipley LLP
20 Little Britain
London EC1A 7DH (GB)**

Remarks:
The application is published incomplete as filed
(Article 93 (2) EPC).

(54) **Display device**

(57)    A display device which can operate at lower driving voltages and have improved luminous efficiency is disclosed. The display device includes: a first substrate and a second substrate with a plurality of cells therebetween, a plurality of first and second electrodes arranged between the first and second substrates, insulating layers respectively formed on the first electrodes. Electrons are accelerated and emitted into the cells when voltages are applied to the first and second electrodes. A gas within the cells is excited by the electrons, and light emitting layers formed between the first and second substrates or on outer sides of the first and second substrates emits light.

EP 1 772 887 A1

## Description

The present invention relates to a display device which can operate at lower driving voltages and have improved luminous efficiency.

A plasma display panel (PDP), which is a flat display apparatus, forms an image using an electrical discharge. PDPs are used widely due to their superior display properties such as high brightness and large viewing angle. PDPs emit visible light from a phosphor material which is excited by ultraviolet rays generated from a gas discharge between electrodes, when DC and AC voltages are applied to the electrodes.

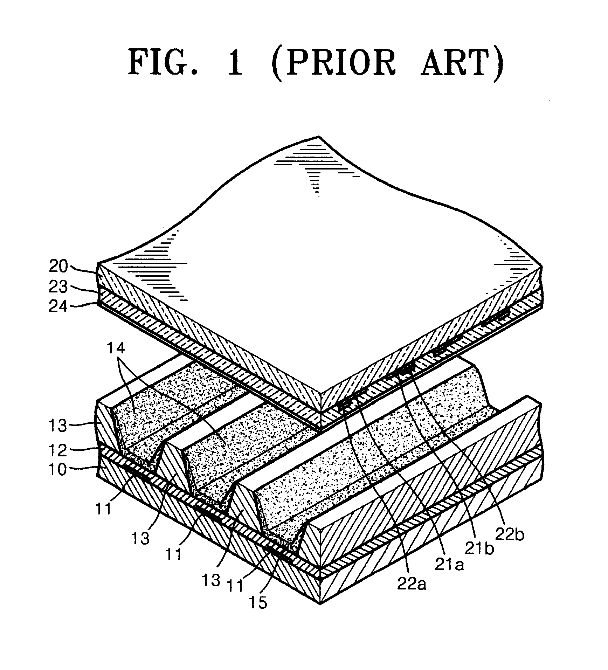

FIG. 1 is an exploded perspective view of a conventional alternating current (AC) type surface discharge PDP. Referring to FIG. 1, a rear substrate 10 and a front substrate 20 are arranged to oppose each other with a discharge space in which plasma discharge takes place between the rear substrate 10 and the front substrate 20. A plurality of address electrodes 11 are formed on the rear substrate 10 and are covered by a first dielectric layer 12. A plurality of barrier ribs 13, which divide the discharge space to define a plurality of discharge cells 14 and prevent electrical and optical cross-talk between the discharge cells 14, are formed on an upper surface of the first dielectric layer 12. Red, green, and blue phosphor layers 15 are coated on the inner walls of the discharge cells 14. A discharge gas that generally includes Xe fills the discharge cells 14.

The front substrate 20 is transparent and is coupled to the rear substrate 10 on which the barrier ribs 13 are formed. A pair of sustain electrodes 21a and 21b perpendicular to the address electrodes 11 are formed on the lower surface of the front substrate 20 of each discharge cell 14. The sustain electrodes 21a and 21b are formed of a conductive material, such as indium tin oxide (ITO), which can transmit visible light. To reduce the line resistance of the sustain electrodes 21a and 21b, metallic bus electrodes 22a and 22b are formed on the lower surface of the sustain electrodes 21a and 21b. The bus electrodes 22a and 22b have narrower widths than the sustain electrodes 21a and 21b. The sustain electrodes 21a and 21b and the bus electrodes 22a and 22b are covered by a transparent second dielectric layer 23. A protection layer 24 is formed of MgO on the lower surface of the second dielectric layer 23. The protection layer 24 prevents damage to the second dielectric layer 23 by sputtering of plasma particles, and reduces the required discharge voltage by emitting secondary electrons.

To drive the PDP having the above structure, an address discharge and a sustain discharge are generated. The address discharge occurs between the address electrode 11 and one of the pair of the sustain electrodes 21a and 21b, and at this time, wall charges are formed. The sustain discharge is caused by a potential difference between the pair of sustain electrodes 21a and 21b, and emits ultraviolet rays to excite a phosphor layer 15 and generate visible light. Thus, the visible light emitted through the upper substrate forms the image displayed by the PDP.

The plasma discharge can also be applied to a flat lamp for the back-light of a liquid crystal display (LCD).

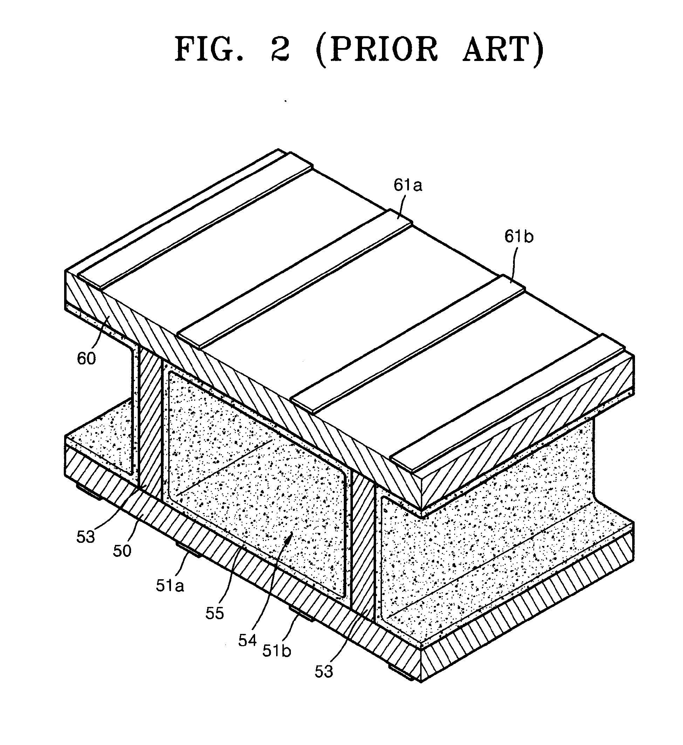

FIG. 2 is a perspective view of a conventional flat lamp having an AC voltage type surface discharge structure. Referring to FIG. 2, a rear substrate 50 and a front substrate 60 are arranged to oppose each other with a predetermined gap therebetween formed by a plurality of spacers 53, resulting in a discharge space where plasma discharge occurs between the rear and front substrates 50 and 60. The spacers 53 are formed between the rear and front substrates 50 and 60, divide the discharge space into a plurality of discharge cells 54, and maintain the predetermined gap between the rear and front substrates 50 and 60. A plurality of phosphor layers 55 are coated on inner walls of the discharge cells 54. The phosphor layers 55 are excited by ultraviolet rays generated due to the discharge and thus generate visible light. A discharge gas that generally includes Xe fills the discharge cells 54.

Discharge electrodes for generating plasma discharge in each discharge cell are formed on the rear substrate 50 and the front substrate 60. More specifically, a pair of first and second lower electrodes 51a and 51b are formed on the lower surface of the rear substrate 50 in each discharge cell, and a pair of first and second upper electrodes 61a and 61b is formed on the upper surface of the front substrate 60 in each discharge cell. Here, discharge does not occur between the first lower and upper electrodes 51a and 61a, or between the second lower and upper electrodes 51b and 61b, since these are at the same potential. On the other hand, a surface discharge occurs parallel to the rear substrate 50 and the front substrate 60, since there is a potential difference between the first and second lower electrodes 51a and 51b and between the first and second upper electrodes 61a and 61b.

In conventional PDPs constructed as above, plasma discharge occurs when a discharge gas containing Xe is ionized and then drops from its excited state, thereby emitting UV rays. However, conventional PDPs and flat lamps operated by plasma discharge require sufficiently high energy to ionize the discharge gas, and thus, have a high driving voltage and low luminous efficiency.

The present invention provides a display device which can operate at lower driving voltages and have improved luminous efficiency.

The above and other features and advantages will become more apparent by description of embodiments with reference to the attached drawings in which:

FIG. 1 is an exploded perspective view of a conventional plasma display panel (PDP);

FIG. 2 is a perspective view of a conventional flat lamp;

FIG. 3 is a cross-sectional view of a display device according to a first embodiment;

FIG. 4 is an energy-band diagram illustrating an energy level with respect to location in a metal-insulator-metal (MIM) structure;

FIG. 5 is a graph illustrating energy levels of Xe;

FIGS. 6A through 6D illustrate waveforms that can be applied to the electrodes in the display device of FIG. 3;

FIG. 7 is a cross-sectional view illustrating a first modified version of the display device of FIG. 3;

FIG. 8 is a cross-sectional view illustrating a second modified version of the display device of FIG. 3;

FIG. 9 is a cross-sectional view illustrating a display device according to a second embodiment of the present invention;

FIGS. 10A through 10D illustrate waveforms that can be applied to the electrodes in the display device of FIG. 9;

FIG. 11 is a cross-sectional view illustrating a modified version of the display device of FIG. 9;

FIG. 12 is a cross-sectional view illustrating a display device according to a third embodiment;

FIG. 13 is a cross-sectional view illustrating a modified version of the display device of FIG. 12;

FIG. 14 is a cross-sectional view illustrating a display device according to a fourth embodiment;

FIG. 15 is a cross-sectional view illustrating a modified version of the display device of FIG. 14;

FIG. 16 is a cross-sectional view illustrating a display device according to a fifth embodiment;

FIG. 17 is a cross-sectional view illustrating a modified version of the display device of FIG. 16;

FIG. 18 is a cross-sectional view illustrating a display device according to a sixth embodiment; and

FIG. 19 is a cross-sectional view illustrating a modified version of the display device of FIG. 18.

Certain embodiments will now be described more fully with reference to the accompanying drawings. The invention may, however, be embodied in many different forms and should not be construed as being limited to the embodiments set forth herein. Like reference numerals in the drawings denote like elements, and thus their description will not be repeated.

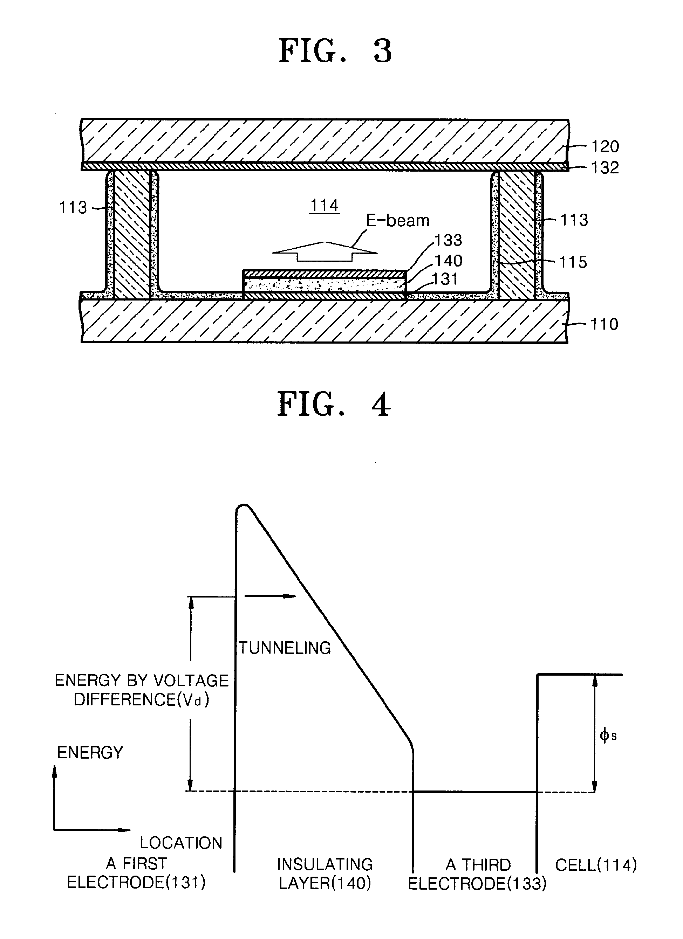

FIG. 3 is a cross-sectional view of a display device according to a first embodiment.

Referring to FIG. 3, a first substrate 110 and a second substrate 120 face each other with a predetermined gap therebetween. The first substrate 110 and the second substrate 120 may be formed of glass substrates having superior transmittance of visible light and may be colored to enhance bright-room contrast. In addition, the first substrate 110 and the second substrate 120 may be formed of plastics and may thus have a flexible structure. Other materials may also be used. A plurality of barrier ribs 113 are interposed between the first and second substrates 110 and 120. The barrier ribs 113 divide a space between the first and second substrates 110 and 120 into a plurality of cells 114 and prevent electrical and optical cross-talk between the cells 114.

Red, green, or blue light emitting layers 115 are coated on the inner walls of each of the cells 114, respectively. The light emitting layers 115 are material layers that receive ultraviolet (UV) rays and generate visible light. In some embodiments, the light emitting layers 115 may also generate visible light by being excited by electrons. Further, the light emitting layers 115 may include quantum dots.

A gas that includes Xe may fill the cells 114. The gas may comprise $N_2$, $D_2$, $CO_2$, $H_2$, CO, Kr, or air. When the gas is $N_2$, the gas generates UV rays having long wavelengths. Therefore, the light emitting layers 115 may be formed on outer surfaces of the first or second substrate 110 or 120. The gas used can generate UV rays when excited by external energy such as an electron beam. In addition, the gas may act as a discharge gas.

In each of the cells 114, a first electrode 131 is formed on an upper surface of the first substrate 110, and a second electrode 132 is formed on a lower surface of the second substrate 120 and crosses the first electrode 131. The first electrode 131 and the second electrode 132 are a cathode electrode and an anode electrode, respectively. The second electrode 132 may be formed of a transparent conductive material, such as indium tin oxide (ITO), so that visible light can pass therethrough. A dielectric layer (not shown) may further be formed on the second electrode 132.

An insulating layer 140 is formed on an upper surface of the first electrode 131, and a third electrode 133, which is a grid electrode, is formed on an upper surface of the insulating layer 140. Within the insulating layer 140 electrons are accelerated, and thus electronic beams are generated. This will now be described in more detail with reference to FIG. 4.

FIG. 4 is an energy-band diagram illustrating an energy level with respect to location in a metal-insulator-metal (MIM) structure formed by the first electrode 131, the insulating layer 140, and the third electrode 133. Referring to FIG. 4, when there is an energy difference $V_d$ caused by a voltage difference between the first electrode 131 and the third electrode 133, electrons travel from the first electrode 131 toward the insulating layer 140. After tunnelling through the insulating layer 140 and passing the third electrode 133, the electrons are emitted into the cells 114. Theoretically, if the electrons do not collide with the insulating layer 140 or the third electrode 133, the electrons may have acceleration energy which is obtained after a surface work function $\Phi_s$ is subtracted from voltage energy (E) applied to the electrons. Therefore, the electrons having this acceleration energy are emitted into the cells 114. However, in practice, the electrons lose energy through many collisions. The energy loss includes an electro-phonon scattering loss within the insulating layer 140, a junction-plasmon exitation loss at the boundary between the insulating layer 140 and the third electrode 133, and an electron-electron scattering loss in the third electrode 133. When there are fewer collisions, the electrons having higher acceleration energy may be emitted into the cells 114. When there are more collisions, the electrons having lower acceleration energy may be emitted into the cells 114 or may not be emitted at all. In the present embodiment, the acceleration energy of the electrons is given by

$$E = V_d - \varphi_s - \upsilon \qquad , \ldots (1)$$

where E is acceleration energy, $V_d$ is energy obtained from a voltage difference, $\Phi_s$ is a work function of the third electrode 133 (approximately 5 eV in the some embodiments), and $\upsilon$ is consumed energy (0 - 5 eV in the some embodiments).

It can be understood from Equation 1 that the materials and thicknesses of the insulating layer 140 and the third electrode 133 are important for enhancing the efficiency of electron emissions. For tunnelling, the insulating layer 140 should be thin. However, the thickness of the insulating layer 140 should be between about 2 nm and about 50 nm to prevent insulation destruction due to a voltage difference between both surfaces of the insulating layer 140. In addition, the insulating layer 140 may be formed of $Al_2O_3$, $Si_3N_4$, or $SiO_2$. If the first and second substrates 110 and 120 are formed of plastics, the insulating layer 140 may be formed of a plastic family such as polyimide. In particular, ion-beam-irradiated polyimide which is processed in an accelerated manner using Ar may be used for the insulating layer 140.

The third electrode 133 may be formed of a single material, a compound material, or a stack of these. In this case, the lower the surface work function of a material, the longer the mean free path and the stronger the adhesiveness of the material to the insulating layer 140, the better. Materials such as Au, Ag, Pt, Ir, Ni, Mo, Ta, W, Ti, Zr, or tungsten silicide. Therefore, the third electrode 133 may, for example, be formed of an Au layer, a Pt layer and an Ir layer stacked on the insulating layer 140. The third electrode 133 may also be formed of a Pt layer and a Ti layer stacked on the insulating layer 140, or may be formed of tungsten silicide. For the efficiency of electron emissions, the third electrode 133 should be thin. However, the thickness of the third electrode 133 must be determined in consideration of deterioration due to collisions between the third electrode 133 and electrons. Therefore, the thickness of the third electrode may be between about 2 nm and about 50 nm.

As described above, when predetermined voltages are applied to the first electrode 131 and the third electrode 133 (and/or the second electrode 132), respectively, electrons inflowing from the first electrode 131 are accelerated within the insulating layer 140 and an electronic (E)-beam is emitted into the cells 114 through the third electrode 133. The E-beam is emitted into the cells 114 and excites the gas. The excited gas generates UV rays as it stabilizes. Then, the UV rays excite the light emitting layers 115, and the excited light emitting layers 115 generate visible light. Finally, the generated visible light is directed toward the second substrate 120, thereby forming an image.

The E-beam may have an energy higher than the energy required to excite the gas and lower than the energy required for ionizing the gas. Therefore, a voltage to generate a correct electron energy is applied across the first electrode 131 and the third electrode 133 (and/or the second electrode 132).

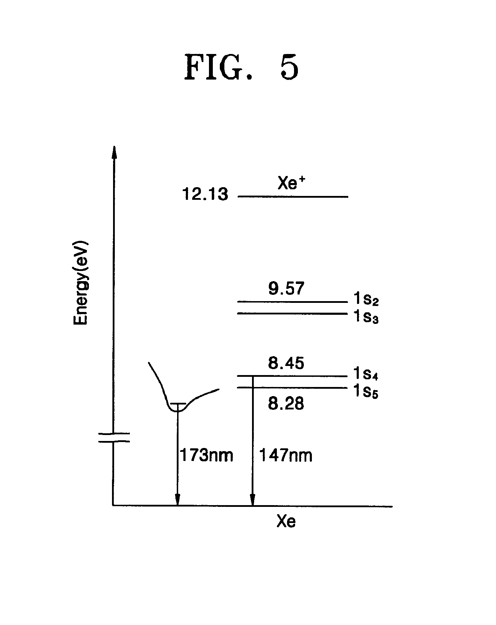

FIG. 5 is a graph illustrating energy levels of Xe, which is a source for generating UV rays. Referring to FIG. 5, about 12.13 eV of energy is required to ionize Xe, and more than about 8.28 eV is required to excite Xe. More specifically, about 8.28 eV, about 8.45 eV, and about 9.57 eV are required to excite Xe to $1S_5$, $1S_4$, and $1S_2$ states, respectively. The excited Xe* generates approximately 147 nm of UV rays as it stabilizes. Eximer $Xe_2$* is generated by colliding the excited Xe* with Xe in a grounded state, and the $Xe_2$* generates ultraviolet rays of approximately 173 nm while stabilizing.

Accordingly, in the present invention, an E-beam emitted into a cell 114 by the electron accelerating layer 140 can have an energy of about 8.28 - about 12.13 eV to excite the Xe. In this case, the E-beam preferably has an energy of about 8.28 - about 9.57 eV or about 8.28 - about 8.45 eV. Also, the E-beam can have an energy of about 8.45 - about 9.57 eV.

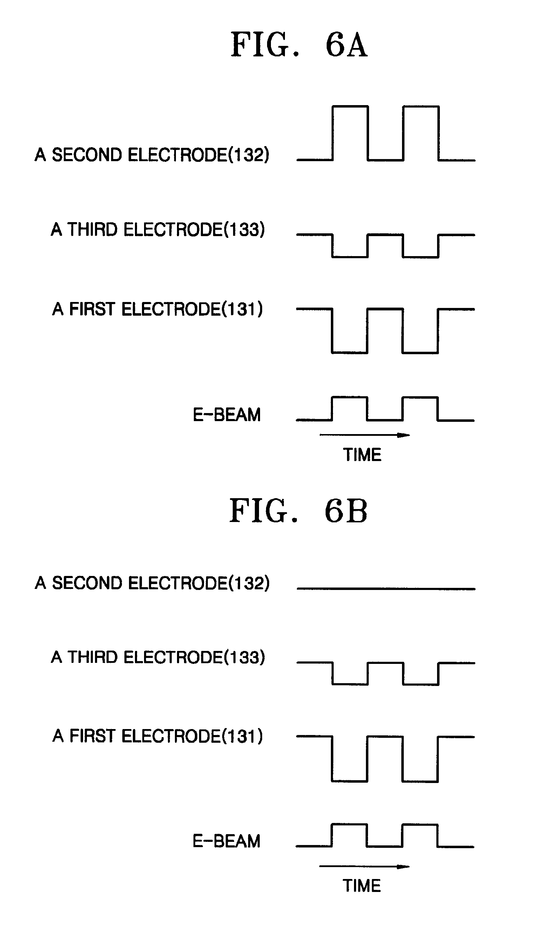

FIGS. 6A through 6D illustrate waveforms that can be applied to the electrodes in the display device of FIG. 3.

Referring to FIG. 6A, different pulse voltages are respectively applied to the first electrode 131, the second electrode 132, and the third electrode 133. At this time, when $V_1$, $V_2$, and $V_3$ represent the voltages applied respectively to the first electrode 131, the second substrate 120, and the third electrode 133, $V_1 < V_3 < V_2$.

When the above voltages are respectively applied to the electrodes, an E-beam is emitted into the cell 114 by the voltages applied to the first electrode 131 and the third electrode 133 through the insulating layer 140. The emitted E-beam is accelerated toward the second electrode 132 by the voltages applied to the third electrode 133 and the second electrode 132, and a gas is excited by this process. At this time, the gas can be controlled to a discharge state by adjusting the voltage of the second electrode 132. On the other hand, as depicted in FIG. 6B, the second electrode 132 can be grounded. In this case, electrons arriving at the second electrode 132 can be discharged to the outside.

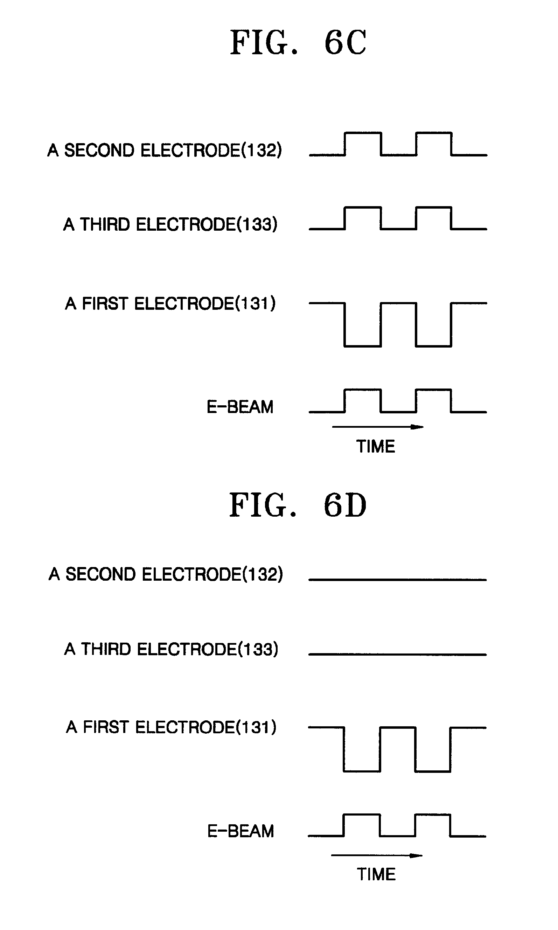

Referring to FIG. 6C, in some embodiments, the voltages applied to the first electrode 131, the second electrode 132, and the third electrode 133 are respectively $V_1$, $V_2$, and $V_3$, and $V_1 < V_3 = V_2$. When $V_1$, $V_2$, and $V_3$ voltages are applied to the electrodes, an E-beam is emitted into the cell 114 by the voltages applied to the first electrode 131 and the third electrode 133 through the insulating layer 140, and a gas is excited by the emitted E-beam. On the other hand, as depicted in FIG. 6D, the second electrode 132 and the third electrode 133 can be grounded. In this case, electrons arriving at the second electrode 132 can be discharged to the outside.

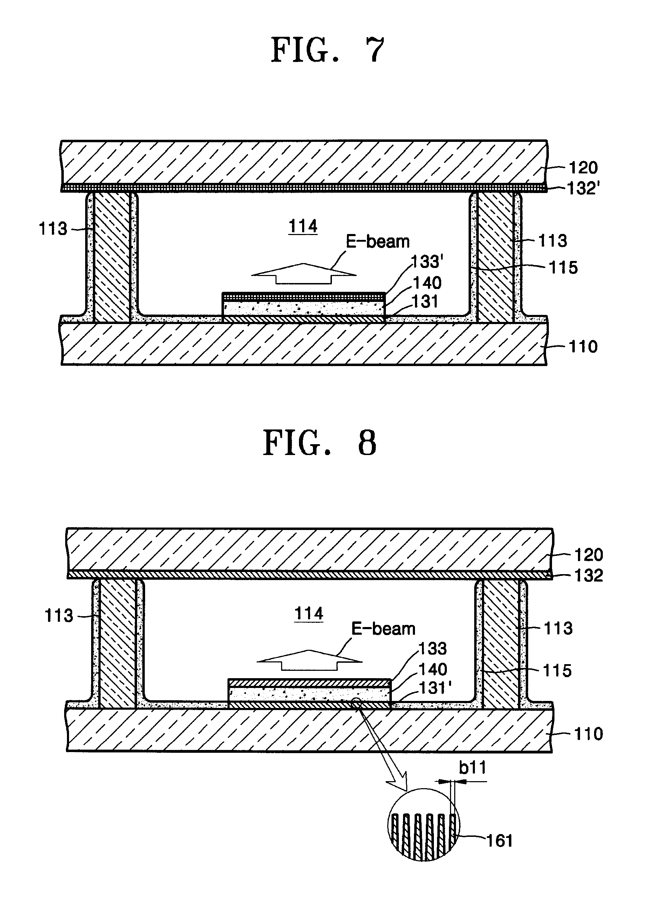

FIG. 7 is a cross-sectional view illustrating a first modified version of the display device of FIG. 3. In FIG. 7, the differences from the FIGS. 6A through 6D will be described. Referring to FIG. 7, the second electrode 132' is formed in a mesh structure so that visible light generated from the cells 114 can be transmitted. The third electrode 133' is formed in a mesh structure so that electrons accelerated by the insulating layer 140 can readily be emitted into the cells 114.

FIG. 8 is a cross-sectional view illustrating a second modified version of the display device of FIG. 3. Referring to FIG. 8, the first electrode 131' is formed on the upper surface of the first substrate 110 in each of the cells 114. A plurality of tips 161 are formed on a surface of the first electrode 131' facing the cells 114. When a voltage is applied to the first electrode 131' and the second electrode 132 to form an electric field, the electric field is concentrated on the tips 161. Therefore, when the surface of the first electrode 131' is flatter, a larger number of electrons can be emitted.

The first electrode 131' having the tips 161 may be formed of various materials. For example, the first electrode 131' may be formed of metal or silicon. In some embodiments, the tips 161 may be formed by etching a surface of metal using an etching method. In addition, the tips 161 may be formed by etching oxidized porous silicon using a solution such as HF.

The first electrode 131' may also be formed of a material which structurally has tips, such as, but not limited to, carbon nanotube, silicon nanotube, or silicon nanowire.

A width b11 of an end of each of the tips 116 may, for example, be about 1 nm through about 10 $\mu$m. If the width b11 of the end of each of the tips 161 is greater than 10 $\mu$m, the efficiency of electronic emission deteriorates. Therefore, about 1 nm through about 10 $\mu$m is appropriate for the width b11 of the end of each of the tips 116.

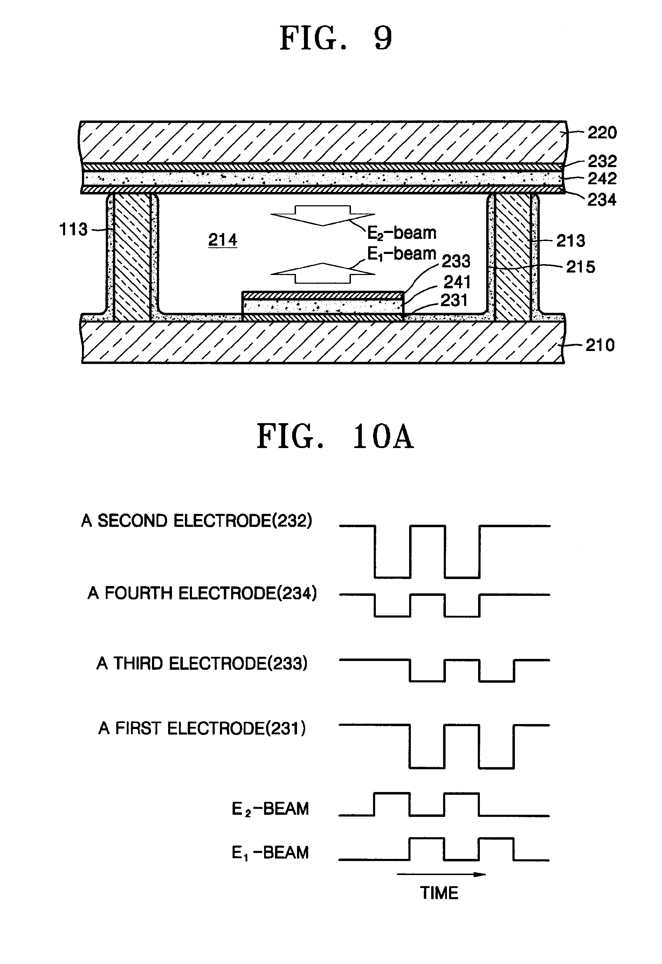

FIG. 9 is a cross-sectional view illustrating a display device according to another embodiment.

Referring to FIG. 9, a first substrate 210 and a second substrate 220 are arranged to oppose each other with a substantially constant distance therebetween. A plurality of barrier ribs 213 are formed between the first and second substrates 210 and 220 to divide the space between the first and second substrates 210 and 220 and define a plurality of cells 214 therein. Red, green, or blue light emitting layers 215 are coated on the inner walls of each of the cells 214, respectively, and a gas that may include Xe fills the cells 214.

A first electrode 231 is formed on the upper surface of the first substrate 210 in each cell 214, and a second electrode 232 is formed on the lower surface of the second substrate 220 in each cell 214 to cross the first electrode 231. First and second insulating layers 241 and 242 are respectively formed on the first and second electrodes 231 and 232, and third and fourth electrodes 233 and 234 are respectively formed on the first and second insulating layers 241 and 242.

The thicknesses of the first and second insulating layers 241 and 242 may be between about 2 nm and about 50 nm. In addition, the first and second insulating layers 241 and 242 may be formed of, for example, $Al_2O_3$, $Si_3N_4$, $SiO_2$ or a plastic.

The third and fourth electrodes 233 and 234 may be formed of a single material, a compound material, or a stack of these In addition, the thicknesses of the third and fourth electrodes 233 and 234 may be between about 2 nm and about 50 nm.

When a voltage is applied across the first electrode 231 and the third electrode 233 (and/or the second electrode 232), the first insulating layer 241 emits a first electron beam $E_1$-beam into the cell 214 through the third electrode 233 by accelerating electrons inflowing from the first electrode 231. Also, when a voltage is respectively applied across the second electrode 232 and the fourth electrode 234 (and/or the first electrode 231), the second insulating layer 242 emits a second electron beam $E_2$-beam into the cell 214 through the fourth electrode 234 by accelerating electrons inflowing from the second electrode 232. Accordingly, the first and second insulating layers 241 and 242 alternately emit electron beams into the cell 214 because an alternating current is applied between the first electrode 231 and the second electrode 232. Each of the first and second electron beams excites the gas, which generates UV rays that excite the light emitting layer 215 when stabilizing. As described above, the first and second electron beams preferably have an energy greater than the energy required to excite the gas and less than the energy required to ionize the gas. More specifically, the first and second electron beams can have an energy of about 8.28 - about 12.13 eV when Xe is used.

The second and fourth electrodes 232 and 234 can be formed of a transparent conductive material, such as ITO, for transmitting visible light. The third and fourth electrodes 233 and 234 can be formed in a mesh structure so that electrons accelerated by the first and second electron accelerating layers 241 and 242 can be readily emitted into the cell 214. Also, a plurality of address electrodes (not shown) can further be formed on either the first substrate 210 or the second substrate 220.

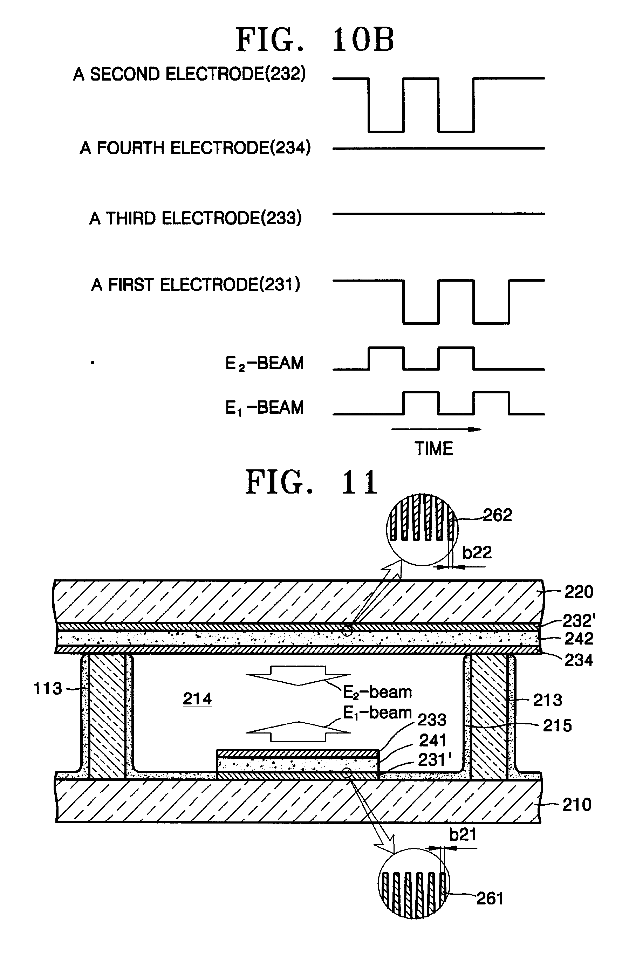

FIGS. 10A and 10B illustrate voltage waveforms that can be applied to the electrodes in the display device.

Referring to FIG. 10A, different pulse voltages are respectively applied to each of the first electrode 231, the second electrode 232, the third electrode 233, and the fourth electrode 234. If the voltages applied to the first electrode 231, the second electrode 232, the third electrode 233, and the fourth electrode 234 are respectively $V_1$, $V_2$, $V_3$, and $V_4$, then $V_1 < V_3$ and $V_2 < V_4$. When

the above voltages are respectively applied to the electrodes, a first electron beam $E_1$-beam is emitted into the cell 214 due to the voltages applied across the first electrode 231 and the third electrode 233 (and/or the second electrode 232) through the first insulating layer 241, and a second electron beam $E_2$-beam is emitted into the cell 214 through the second insulating layer 242 due to the voltages applied across the second electrode 232, and the fourth electrode 234 (and/or the first electrode 231). Here, the alternately emitted first and second electron beams excite the gas, because an alternating current is applied between the first electrode 231 and the second electrode 232. As depicted in FIG. 10B, the third electrode 133 and the fourth electrode 234 can be grounded.

FIG. 11 is a cross-sectional view illustrating a modified version of the display device of FIG. 9. In FIG. 11. Referring to FIG. 11, a first electrode 231' is formed on the upper surface of the first substrate 210 in each of the cells 214. A second electrode 232' crossing the first electrode 231' is formed on a bottom surface of the second substrate 220 in each of the cells 214.

A plurality of tips 261 and 262 are formed on respective surfaces of the first and second electrodes 231' and 232' facing the cells 214. The first and second electrodes 231' and 232' having the tips 261 and 262, respectively, may be formed of, for example, metal or silicon. In addition, widths b21 and b22 of respective ends of the tips 261 and 262 may be about 1 nm through about 10 $\mu$m.

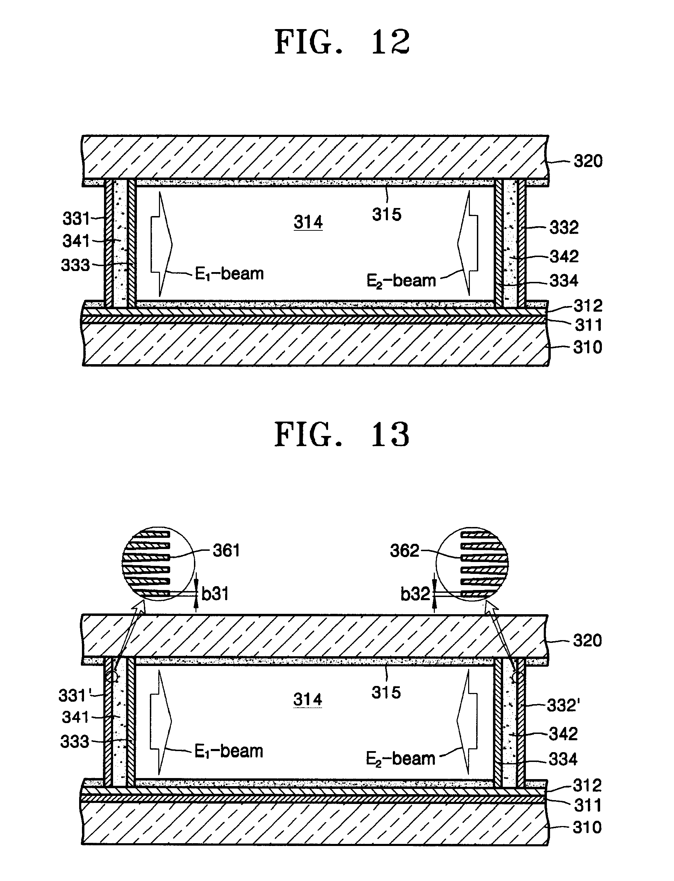

FIG. 12 is a cross-sectional view illustrating a display device according to another embodiment.

Referring to FIG. 12, a first substrate 310 and a second substrate 320 are arranged to oppose each other with a substantially constant distance therebetween to define a plurality of cells 314 between the first and second substrates 310 and 320. A plurality of address electrodes 311 are formed on the upper surface of the first substrate 310, covered by a dielectric layer 312. Red, green, or blue light emitting layers 315 are coated on the inner walls of the cells 314, respectively, and a gas, containing, for example, Xe fills the cells 314.

A pair of first and second electrodes 331 and 332 is formed between the first substrate 310 and the second substrate 320 in each cell 314. Here, the first and second electrodes 331 and 332 are located on both sides of the cell 314. First and second insulating layers 341 and 342 are respectively formed on the inner surfaces of the first and second electrodes 331 and 332, and third and fourth electrodes 333 and 334 are respectively formed on the first and second insulating layers 341 and 342.

The thicknesses of the first and second insulating layers 341 and 342 may be between about 2 nm and about 50 nm. In addition, the first and second insulating layers 341 and 342 may be formed of $Al_2O_3$, $Si_3N_4$, $SiO_2$ or a plastic.

The third and fourth electrodes 333 and 334 may be formed of a single material, a compound material, or a stack of these. In addition, the thicknesses of the third and fourth electrodes 333 and 334 may be between about 2 nm and about 50 nm.

When a voltage is applied across the first electrode 331 and the third electrode 333 (and/or the second electrode 332), the first insulating layer 341 emits a first electron beam $E_1$-beam into the cell 314. When a voltage is applied across the second electrode 332 and the fourth electrode 334 (and/or the first electrode 331), the second insulating layer 342 emits a second electron beam $E_2$-beam into the cell 314. Here, the first and second electron beams can be alternately emitted into the cell 314, because an alternating current is applied between the first electrode 331 and the second electrode 332. Each of the first and second electron beams excites the gas, which generates UV rays that excite a light emitting layer 315 when stabilizing. As described above, the first and second electron beams preferably have an energy greater than the energy required to excite the gas and less than the energy required to ionize the gas. More specifically, the first and second electron beams can have an energy of about 8.28 - about 12.13 eV when using Xe.

The third electrode 333 and the fourth electrode 334 can be formed in a mesh structure so that electrons accelerated by the first and second insulating layers 341 and 342 can be readily emitted into the cell 314. The first and second insulating layers 341 and 342 can form the cells 314 by defining a space between the first substrate 310 and the second substrate 320. A plurality of barrier ribs (not shown) can further be formed between the first substrate 310 and the second substrate 320 to define the space between the first substrate 310 and the second substrate 320 into the cells 314.

In a display device having the above-described structure, the voltage waveforms shown in FIGS. 10A and 10B can be applied to the electrodes in the same manner as described above. Thus, detailed descriptions on the application of the voltage waveforms will not be repeated.

FIG. 13 is a cross-sectional view illustrating a modified version of the display device of FIG. 12. Referring to FIG. 13, a pair of a first electrode 331' and a second electrode 332' are formed between the first substrate 310 and the second substrate 320 in each of the cells 314. A plurality of tips 361 and 362 are formed on respective surfaces of the first and second electrodes 331' and 332' facing the cells 314. The first and second electrodes 331' and 332' having the tips 361 and 362, respectively, may be formed of metal or silicon. In addition, widths b31 and b32 of respective ends of the tips 361 and 362 may be, for example, about 1 nm through about 10 $\mu$m.

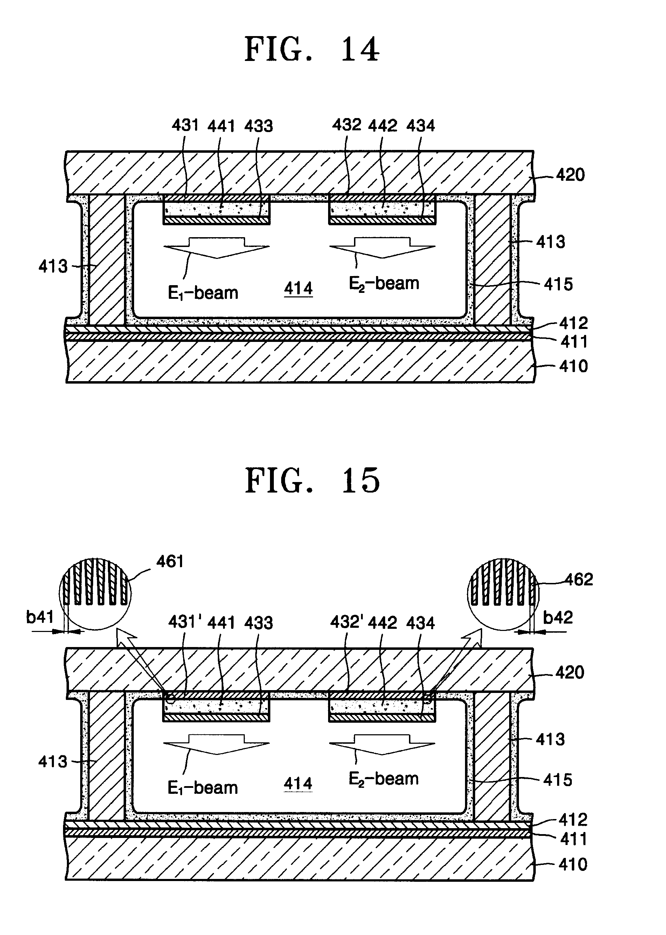

FIG. 14 is a cross-sectional view illustrating a display device according to a fourth embodiment of the present invention.

Referring to FIG. 14, a first substrate 410 and a second substrate 420 are arranged to oppose each other with a substantially constant distance therebetween. A plurality of barrier ribs 413 are formed between the first substrate 410 and the second 420 to divide the space between the first substrate 410 and the second substrate 420 and define a plurality of cells 414. Light emitting layers 415 having colors, for example, red, green, and blue, are coated on the inner walls of the cells 414, and a gas that contains, for example, Xe fills the cells 414.

A plurality of address electrodes 411 are formed on the upper surface of the first substrate 410, covered by a dielectric layer 412. A pair of first and second electrodes 431 and 432 is formed on the lower surface of the second substrate 420 in each cell 414. Here, the first and second electrodes 431 and 432 are formed to cross the address electrodes 411. First and second insulating layers 441 and 442 are respectively formed on the lower surfaces of the first and second electrodes 431 and 432, and third and fourth electrodes 433 and 434 are respectively formed on the lower surfaces of the first and second insulating layers 441 and 442.

The thicknesses of the first and second insulating layers 441 and 442 may be, for example, between about 2 nm and about 50 nm. In addition, the first and second insulating layers 441 and 442 may, for example, be formed of $Al_2O_3$, $Si_3N_4$, $SiO_2$ or a plastic.

The third and fourth electrodes 433 and 434 may be formed of a single material, a compound material, or a stack of these. In addition, the thicknesses of the third and fourth electrodes 433 and 434 may be between about 2 nm and about 50 nm.

When a voltage is respectively applied across the first electrode 431 and the third electrode 433, the first insulating layer 441 emits a first electron beam $E_1$-beam into the cell 414. When a voltage is respectively applied to the second electrode 432 and the fourth electrode 434, the second insulating layer 442 emits a second electron beam $E_2$-beam into the cell 414. Here, the first and second electron beams are alternately emitted into the cell 414, since an alternating current is applied between the first electrode 431 and the second electrode 432. Each of the first and second electron beams excites the gas, which generates UV rays that excite a light emitting layer 415 when stabilizing. As described above, the first and second electron beams advantageously have an energy greater than the energy required to excite the gas and less than the energy required to ionize the gas. More specifically, the first and second electron beams can have an energy of about 8.28 - about 12.13 eV if using Xe.

The first through fourth electrodes 413, 432, 433, and 434 can be formed of a transparent conductive material such as ITO for transmitting visible light. The third and fourth electrodes 433 and 434 can be formed in a mesh structure so that electrons accelerated by the first and second insulating layers 441 and 442 can readily be emitted into the cell 414.

In a display device having the above-described structure, the voltage waveforms shown in FIGS. 10A and 10B can be applied to the electrodes in the same manner as described above. Thus, detailed descriptions on the application of the voltage waveforms will not be repeated.

FIG. 15 is a cross-sectional view illustrating a modified version of the display device of FIG. 14.

Referring to FIG. 15, a pair of a first electrode 431' and a second electrode 432' are formed on the second substrate 420 in each of the cells 414. A plurality of tips 461 and 462 are formed on respective surfaces of the first and second electrodes 431' and 432' facing the cells 414. The first and second electrodes 431' and 432' having the tips 461 and 462, respectively, may, for example, be formed of metal or silicon. In addition, widths b41 and b42 of respective ends of the tips 461 and 462 may, for example, be about 1 nm through about 10 μm.

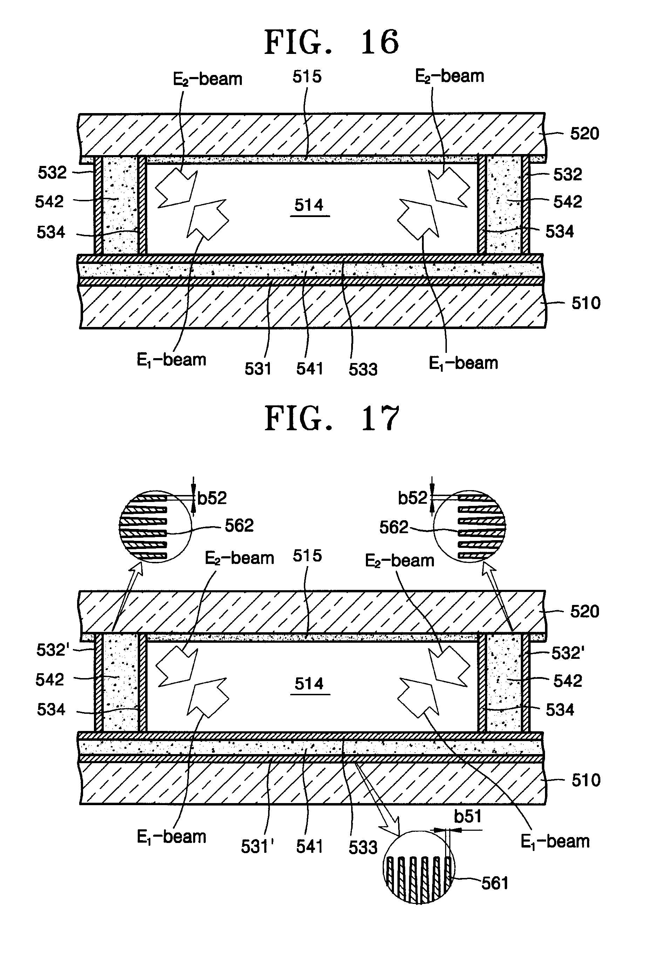

FIG. 16 is a cross-sectional view illustrating a display device according to another embodiment.

Referring to FIG. 16, a first substrate 510 and a second substrate 520 are arranged to oppose each other with a substantially constant distance therebetween to define a plurality of cells 514 between the first and second substrates 510 and 520. Red, green, or blue light emitting layers 515 are coated on the inner walls of the cells 514, respectively, and a gas that contains, for example, Xe fills the cells 514.

A pair of first and second electrodes 531 and 532 are formed between the first substrate 510 and the second substrate 520 in each of the cells 514. The first electrode 531 is disposed on the upper surface of the first substrate 510, and the second electrode 532 is disposed at both sides of each of the cells 514. The first and second electrodes 531 and 532 cross each other.

First and second insulating layers 541 and 542 are respectively formed on the inner surfaces of the first and second electrodes 531 and 532, and third and fourth electrodes 533 and 534 are respectively formed on the first and second insulating layers 541 and 542.

The thicknesses of the first and second insulating layers 541 and 542 may be, for example, between about 2 nm and about 50 nm. In addition, the first and second insulating layers 541 and 542 may, for example, be formed of $Al_2O_3$, $Si_3N_4$, $SiO_2$ or a plastic.

The third and fourth electrodes 533 and 534 may be formed of a single material, a compound material, or a stack of these. In addition, the thicknesses of the third and fourth electrodes 533 and 534 may be between about 2 nm and about 50 nm.

When a voltage is respectively applied across the first electrode 531 and the third electrode 533 (and/or the second electrode 532), the first insulating layer 541 emits a first electron beam $E_1$-beam into the cell 514. When a voltage is respectively applied across the second electrode 532 and the fourth electrode 534 (and/or the first electrode 531), the second insulating layer 542 emits a second electron beam $E_2$-beam into the cell 514. Here, the first and second electron beams are alternately emitted into the cell 514, since an alternating current is applied between the first electrode 531 and the second electrode 532. Each of the first and second electron beams excites the gas, which generates UV rays that excite a light emitting layer 515 when stabilizing. As described above, the first and second electron beams preferably have an energy greater than the energy required to excite the gas and less than the energy required to ionize the gas. More specifically, the first and second electron beams can have an energy of about 8.28 - about 12.13 eV when using Xe.

The third electrode 533 and the fourth electrode 534 can be formed in a mesh structure so that electrons accelerated within the first and second insulating layers 541 and 542 can be readily emitted into the cell 514. The first and second insulating layers 541 and 542 can form the cells 514 by defining a space between the first substrate 510 and the second substrate 520. A plurality of barrier ribs (not shown) can further be formed between the first substrate 510 and the second substrate 520 to define the space between the first substrate 510 and the second substrate 520 into the cells 514.

In a display device having the above-described structure, the voltage waveforms shown in FIGS. 10A and 10B can be applied to the electrodes in the same manner as described above. Thus, detailed descriptions on the application of the voltage waveforms will not be repeated.

FIG. 17 is a cross-sectional view illustrating a modified version of the display device of FIG. 16.

Referring to FIG. 17, a first electrode 531' and two second electrodes 532' are formed in each of the cells 514 between the first substrate 510 and the second substrate 520. The first electrode 531' is disposed on the upper surface of the first substrate 510, and the second electrodes 532' are disposed at both sides of each of the cells 514.

A plurality of tips 561 and 562 are formed on respective surfaces of the first and second electrodes 531' and 532' facing the cells 514. The first and second electrodes 531' and 532' having the tips 561 and 562, respectively, may be formed, for example, of metal or silicon. In addition, widths b51 and b52 of respective ends of the tips 561 and 562 may, for example, be about 1 nm through about 10 $\mu$m.

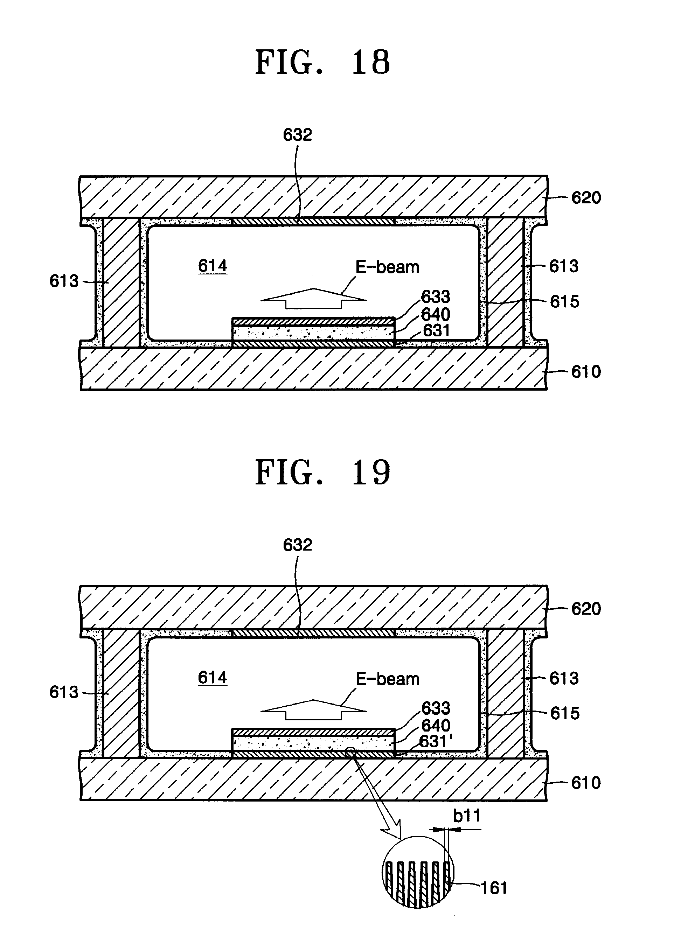

FIG. 18 is a cross-sectional view illustrating a structure display device according to another embodiment.

Referring to FIG. 18, a first substrate 610 and a second substrate 620 are arranged to oppose each other with a constant distance therebetween to define a plurality of cells 614 between the first and second substrates 610 and 620. The first substrate 610 and the second substrate 620 can be formed of transparent glass. Spacers 613 may be formed between the first substrate 610 and the second substrate 620 to divide the space between the first substrate 610 and the second substrate 620 and define the cells 614 therein. Light emitting layers 615 are coated on the inner walls of the cells 614, and a gas that may contain Xe fills the cells 614.

A first electrode 631 is formed on the upper surface of the first substrate 610 in each cell 514, and a second electrode 632 is formed on the lower surface of the second substrate 620 in each cell 614. The first electrode 631 and the second electrode 632 are a cathode electrode and an anode electrode. The second electrode 632 can be formed of a transparent conductive material such as ITO for transmitting visible light, and can be formed in a mesh structure. An insulating layer 640 is formed on the upper surface of the first electrode 631, and a third electrode 633, which is a grid electrode, is formed on the upper surface of the insulating layer 640.

The thickness of the insulating layers 640 may, for example, be between about 2 nm and about 50 nm. In addition, the insulating layer 640 may be formed of $Al_2O_3$, $Si_3N_4$, $SiO_2$ or a plastic.

The third electrode 633 may be formed of a single material, a compound material, or a stack of these.

In addition, the thickness of the third electrode 633 may be between about 2 nm and about 50 nm.

When a voltage is applied across the first electrode 631 and the third electrode 633 (and/or the second electrode 632), an electron beam E-beam is emitted into the cell 614 through the third electrode 633 from electrons inflowing from the first electrode 631. The electron beam emitted into the cell 614 excites a gas, which generates UV rays when stabilizing. The UV rays excite the light emitting layers 615, which emit visible light toward the second substrate 620. The third electrode 633 can be formed in a mesh structure so that electrons accelerated by the insulating layer 640 can be readily emitted into the cell 614.

The electron beam preferably has an energy greater than the energy required to excite the gas and less than the energy required to ionize the gas. Accordingly, the electron beam can have an energy of about 8.28 - about 12.13 eV when using Xe.

In a display device with the above-described structure, the waveforms shown in FIGS. 6A and 6D can be applied to the electrodes in the same manner as described above. Thus, detailed descriptions on the application of the voltage waveforms will not be repeated.

FIG. 19 is a cross-sectional view illustrating a modified version of the display device of FIG. 18.

Referring to FIG. 19, a first electrode 631' is formed on the upper surface of the first substrate 610 in each of the cells 614. A plurality of tips 661 are formed on a surface of the first electrode 631' facing the cells 614.

The first electrode 631' having the tips 661 may be formed of various materials, such as metal or silicon. In addition, widths b61 of an end of each of the tips 661 may, for example, be about 1 nm through about 10 $\mu$m.

The display device according to these embodiments can be applied to, for example, a flat lamp which is used as a backlight of an LCD, or a plasma display pane..

A display device according to these embodiments does not require a high level of energy such that discharge gas can be ionized. Instead, the display device can form an image at a low energy level of electron beams emitted from a MIM structure. Therefore, the display device can operate at lower driving voltages and have improved luminous efficiency.

While the present invention has been particularly shown and described with reference to certain embodiments thereof, it will be understood by those of ordinary skill in the art that various changes in form and details may be made therein without departing from the spirit and scope of the present invention.

## Claims

1. A display device comprising:

   a first substrate, a second substrate, and a plurality of cells between the first and second substrates;
   at least one of the cells including first and second electrodes between the first and second substrates;
   an insulating layer between the first and second electrodes, the insulating layer being configured to emit electrons into the cell when a voltage is applied across the first and second electrodes;
   a gas configured to be excited by the emitted electrons within the cell to produce radiation; and
   light emitting material responsive to the radiation from the gas to emit light for the display.

2. The display device of claim 1 wherein said insulating layer comprises at least one insulating layer region that overlies the first and/or the second electrode and is so configured that electrons can tunnel from the first and/or second electrode through the insulating layer region to be emitted into the cell.

3. The display device of claim 1 or 2, wherein a plurality of tips are formed on surface of the first and/or second electrode.

4. The display device of claim 3, wherein the tips are formed on the surface of the first and/or second electrode facing the cell.

5. The display device of any preceding claim, wherein the first and/or second electrode comprises at least one of metal, silicon, a carbon nanotube, a silicon nanotube, and a silicon nanowire.

6. The display device of any preceding claim, configured so that the energy level of the emitted electrons is greater than the energy required to excite the gas and less than an energy required to ionize the gas.

7. The display device of any preceding claim, further comprising a further electrode disposed on the insulating layer.

8. The display device of claim 7, configured so that when voltages applied to the first electrode, the second electrode, and the further electrode are $V_1$, $V_2$, and $V_3$, respectively, $V_1$ is less than $V_3$ and $V_3$ is less than or equal to $V_2$.

9. The display device of claim 7 or 8, wherein the further electrode has a mesh structure.

10. The display device of claim 7, 6 or 9, wherein the further electrode comprises at least one of Au, Ag, Pt, Ir, Ni, Mo, Ta, W, Ti, Zr, and tungsten silicide.

11. The display device of any one of claims 7 to 10, wherein thicknesses of the further electrode is between about 2 nm and about 50 nm.

12. The display device of any preceding claim, wherein the insulating layer comprises at least one of $Al_2O_3$, $Si_3N_4$, and $SiO_2$.

13. The display device of any preceding claim, wherein the thicknesses of the insulating layer is between about 2 nm and about 50 nm.

14. The display device of any preceding claim, wherein the first and second electrodes are disposed on the first substrate

15. The display device of any one of claims 1 to 14, wherein the first electrode crosses the second electrode.

16. The display device of any preceding claim including a said insulating layer region overlying each of the first and the second electrodes, and so configured that electrons can tunnel from the first and the second electrode through the respective overlying insulating layer to be emitted into the cell.

17. The display device of claim 16 including a third electrode overlying the insulating layer on the first electrode, and a fourth electrode overlying the insulating layer on the second electrode.

18. The display device of any preceding claim wherein the light emitting material comprises a layer formed between the first and second substrates or on outer sides of the first and second substrates.

19. The display device of any preceding claim comprising

a plurality of the first and second electrodes arranged in pairs in the cells;

first insulating layers formed on the first electrodes, the first insulating layers configured to emit first electrons into the cells when voltages are applied across the first and second electrodes;

second insulating layers formed on the second electrodes, the second insulating layers configured to emit second electrons into the cells when voltages are applied across the first and second electrodes.

**19.** The display device of any one of claims 1 to 13, wherein the first and second electrodes are respectively disposed on the first and second substrates.

**20.** The display device of claim 17, wherein, when voltages applied to the first electrodes, the second electrodes, the third electrodes, and the fourth electrodes are $V_1$, $V_2$, $V_3$, and $V_4$, respectively, $V_1$ is less than $V_3$, and $V_2$ is less than $V_4$.

**21.** The display device of any preceding claim, further comprising address electrodes crossing the first and second electrodes.

# FIG. 1 (PRIOR ART)

# FIG. 2 (PRIOR ART)

# FIG. 3

# FIG. 4

# FIG. 5

# FIG. 6A

A SECOND ELECTRODE(132)

A THIRD ELECTRODE(133)

A FIRST ELECTRODE(131)

E-BEAM

TIME

# FIG. 6B

A SECOND ELECTRODE(132)

A THIRD ELECTRODE(133)

A FIRST ELECTRODE(131)

E-BEAM

TIME

# FIG. 6C

A SECOND ELECTRODE(132)

A THIRD ELECTRODE(133)

A FIRST ELECTRODE(131)

E-BEAM

TIME

# FIG. 6D

A SECOND ELECTRODE(132)

A THIRD ELECTRODE(133)

A FIRST ELECTRODE(131)

E-BEAM

TIME

# FIG. 7

120
132'
113
114
E-beam
133'
140
131
113
115
110

# FIG. 8

120
132
113
114
E-beam
133
140
131'
113
115
110
b11
161

# FIG. 9

# FIG. 10A

A SECOND ELECTRODE(232)

A FOURTH ELECTRODE(234)

A THIRD ELECTRODE(233)

A FIRST ELECTRODE(231)

$E_2$-BEAM

$E_1$-BEAM

TIME

# FIG. 10B

A SECOND ELECTRODE(232)

A FOURTH ELECTRODE(234)

A THIRD ELECTRODE(233)

A FIRST ELECTRODE(231)

$E_2$-BEAM

$E_1$-BEAM

TIME

# FIG. 11

# FIG. 12

331 —
341 —
333 —

314    315

E$_1$-beam    E$_2$-beam

320
332
342
334
312
311
310

# FIG. 13

361    362

b31    b32

331'
341 —
333 —

314    315

E$_1$-beam    E$_2$-beam

320
332'
342
334
312
311
310

# FIG. 14

# FIG. 15

# FIG. 16

E₂-beam    515    E₂-beam

520

532    532
542    542
534    534

514

510

E₁-beam    531  541  533    E₁-beam

# FIG. 17

b52
562    562    b52

E₂-beam    515    E₂-beam

520

532'    532'
542    542
534    534

514

510

E₁-beam    531'  541  533    E₁-beam

b51

561

# FIG. 18

632

620

614          E-beam

613

633
640
631

615

610

# FIG. 19

632

620

614          E-beam

613

633
640
631'

615

610

b11

161

**European Patent Office**

## EUROPEAN SEARCH REPORT

Application Number

EP 06 12 1902

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2002 150944 A (MATSUSHITA ELECTRIC WORKS LTD) 24 May 2002 (2002-05-24) * abstract * * page 4, paragraph 23 - page 5, paragraph 27 * * page 9, paragraph 71 - page 10, paragraph 73 * * page 10, paragraph 78-80 * ----- | 1-21 | INV. H01J1/312 H01J17/49 |
| X | JP 2004 200057 A (JAPAN BROADCASTING CORP) 15 July 2004 (2004-07-15) * abstract * * page 4, paragraph 23 - page 5, paragraph 30 * * page 5, paragraph 35 - page 7, paragraph 52 * ----- | 1,2,6-8, 10-12, 14-16, 18-21 | |
| A | EP 1 320 116 A (MATSUSHITA ELECTRIC WORKS LTD [JP]) 18 June 2003 (2003-06-18) * abstract * * page 8, paragraph 49 - page 9, paragraph 55 * ----- | 1-5 | TECHNICAL FIELDS SEARCHED (IPC) H01J |
| A | WO 01/39285 A2 (NOVA CRYSTALS INC [US]) 31 May 2001 (2001-05-31) * abstract * * page 4, lines 2-8,19-24 * * page 8, line 16 - page 9, line 27 * ----- | 1 | |

The present search report has been drawn up for all claims

| Place of search | Date of completion of the search | Examiner |
|---|---|---|
| Munich | 23 February 2007 | Gols, Jan |

EPO FORM 1503 03.82 (P04C01)

## ANNEX TO THE EUROPEAN SEARCH REPORT
## ON EUROPEAN PATENT APPLICATION NO.

EP 06 12 1902

This annex lists the patent family members relating to the patent documents cited in the above-mentioned European search report.
The members are as contained in the European Patent Office EDP file on
The European Patent Office is in no way liable for these particulars which are merely given for the purpose of information.

23-02-2007

| Patent document cited in search report | | Publication date | Patent family member(s) | | Publication date |
|---|---|---|---|---|---|
| JP 2002150944 | A | 24-05-2002 | NONE | | |
| JP 2004200057 | A | 15-07-2004 | NONE | | |
| EP 1320116 | A | 18-06-2003 | CN | 1462463 A | 17-12-2003 |
| | | | WO | 02089166 A1 | 07-11-2002 |
| | | | US | 2003102793 A1 | 05-06-2003 |
| WO 0139285 | A2 | 31-05-2001 | NONE | | |

For more details about this annex : see Official Journal of the European Patent Office, No. 12/82